# EUROPEAN PATENT APPLICATION

(11) **EP 4 718 545 A1**
(43) Date of publication of application: **01.04.2026**
(21) Application number: 24202654.0
(22) Date of filing: 25.09.2024
(51) Int. Cl.: H01M 10/04, H01M 50/403, H01M 50/46

(54) **BATTERY MANUFACTURING SYSTEM AND METHOD**

(71) Applicant: LG Energy Solution, Ltd., Seoul 07335 (KR)
(72) Inventor: CHOI, Jin Hyeong, Daejeon 34122 (KR); HONG, Jong Hyuk, Daejeon 34122 (KR); LEE, Gyu Sun, Daejeon 34122 (KR)
(74) Representative: Goddar, Heinz J.

(57) **Abstract**

A battery manufacturing system and corresponding method, the manufacturing system comprising a cylindrical roller configured to apply roll pressure onto a battery cell while rolling over the battery cell; and a protrusion protruding from a lateral surface of the cylindrical roller in a radial direction of the cylindrical roller; characterized in that the manufacturing system further comprises an actuator configured to apply a controlled pressure to the protrusion in the radial direction.

## Description

### TECHNICAL FIELD

The invention relates to the technical field of battery manufacturing and, specifically, the manufacturing of secondary battery cells. In particular, the invention relates to a battery manufacturing system and a corresponding battery manufacturing method.

Battery technology has been advancing rapidly in recent years. Significant improvements have been made in battery energy density. Enhanced charging capabilities and faster charging times are also being achieved, making battery-using electric devices more practical and convenient for everyday use. As battery technology improves and economies of scale are realized through increased production, the cost of manufacturing batteries is decreasing.

This development particularly allows electric vehicles (EVs) to travel longer distances on a single charge. The increasing importance of batteries for EVs is driven by their positive environmental impact, potential for energy independence, technological advancements, cost reduction, support for renewable energy integration, grid resilience, and alignment with sustainable development objectives.

Corresponding battery cells comprise a layer structure with a first layer comprised of a first electrode material and a second layer comprised of a second electrode material, which are separated by a first separator. To prevent the battery cell from short-circuiting with an adjacent battery cell in a battery cell stack, the layer structure further comprises a second separator adjoining the second layer. To enable further processing steps, prevent damage to the battery cell, and ensure the functionality of the entire battery cell stack, the ends of the first and second separators overlapping the electrode material must be permanently and securely sealed to each other.

In known systems for manufacturing battery cells, the first electrode material and second electrode material are intermittently dispersed onto a first and a second separator film, respectively. This layer structure is then guided into a rolling gap formed under a cylindrical roller. The cylindrical roller is configured to apply a roll pressure onto a battery cell while rolling over the battery cell. The cylindrical roller comprises a protrusion protruding from a lateral surface of the cylindrical roller in a radial direction of the cylindrical roller. This protrusion is adapted to periodically apply a pressure on the first and second separator film in gaps in between layers of electrode material, thereby fusing the first and second separator into a sealing line.

The crucial degree of the sealing (e.g., the adhesion strength of the sealing) directly depends on the applied pressure on the first and second separator film and indirectly on the width of the rolling gap. In Systems corresponding to the State-of-the-Art, this pressure is adjusted by fixing a position of the cylindrical roller with regard to the battery cell passing underneath. An initial rolling gap width is determined by adjusting the position of the cylindrical roller upward or downward until satisfactory sealing is achieved. The position of the cylindrical roller is then fixed. However, the applied pressure and, thus, the degree of sealing varies and may decreases with time. Without significant technical overhead, a faulty sealing line is difficult to detect.

### SUMMARY OF THE INVENTION

The problem is at least partially solved or alleviated by the subject matter of the independent claims of the present disclosure, wherein further examples are incorporated in the dependent claims. In the following, embodiments of the invention are introduced and their features are described in detail. Any, some, or all of the embodiments can be combined with one another unless indicated otherwise or technically inappropriate.

According to an aspect of the present invention, a battery manufacturing system is presented. The battery manufacturing system comprises an actuator configured to apply a controlled pressure to the protrusion in the radial direction.

Thus, instead of relying on indirect means for applying pressure on the protrusion, such as a fixed with of the rolling gap, the pressure applied by the protrusion can be at least in part directly provided by the actuator. As the sealing strength depends on the controlled pressure applied by the protrusion onto the battery, the forming of proper sealing lines can be assured. Consequently, the invention enables the manufacturing of battery cells with consistent and dependable sealing lines.

Here, the term "battery manufacturing" explicitly encompasses the manufacturing of secondary batteries. Generally, a manufacturing system in the sense of the inventions corresponds to a combination of resources and process units that work together to produce batteries. Such systems can comprise various components and facilities, which may be organized in production stages. The battery manufacturing system may encompass all the production stages from raw material preparation to the assembly of battery cells and modules, quality control, testing, and packaging. The battery manufacturing system may further include anyone, some, or each of the additional features as disclosed below unless explicitly indicated otherwise or technically inappropriate. The battery manufacturing system may be or be part of a smart factory, in which the battery manufacturing system as disclosed herein is implemented. The examples and optional features of the automated manufacturing system as disclosed herein may also apply to the smart factory. The term "smart factory" is used herein as commonly understood in the field of industrial processing, particularly in the fields of automation, the Internet of Things, artificial intelligence, big data analytics, cloud computing, and robotics. In particular, the smart factory may be understood in connection with the Industry 4.0 paradigm. The smart factory as used herein may also be referred to as a digital factory or intelligent factory and may indicate an advanced manufacturing facility that utilizes various digital technologies, automation, and data exchange in production processes.

Herein, the term battery may be used in accordance with the teachings of electrochemical energy storage. The battery may encompass a primary battery and a secondary battery. In some examples, the battery may explicitly refer to a secondary battery that is rechargeable. Herein, a battery may indicate an industrial product that stores chemical energy and converts it into electrical energy. The battery may comprise at least one battery cell. A corresponding battery cell comprises at least a positive electrode, a negative electrode, a first and a second separator. Without loss of generality, the battery cell as used herein may refer to a pouch-type battery cell, a prismatic battery cell or a cylindrical battery cell.

Herein, reference is made to "a" battery or "a" battery cell to generally indicate one or more batteries or battery cells for the sake of conciseness. The manufacturing system described herein may be configured to operate and be carried out in an industrialized production process. Hence, the reference herein to the general singular term "a battery" may encompass processing (including e.g., transporting, rolling, sealing) one single battery, multiple battery cells in a sequence (i.e., one battery cell at a time). Furthermore, in specific cases, the general singular term "a battery" may encompass processing multiple batteries as a set of batteries at a time (i.e., in groups).

A cylindrical roller in the sense of the invention is an essentially cylindrical or conical tool, which is adapted for the chipless forming of a plate-shaped workpiece such as a battery cell by applying pressure or force over a line-like surface and/or flat surface of the roll to said workpiece. A cylindrical roller may at least consist of a roller supported by two bearings at each end over which the roller is rotatably mounted on a rotation axis. The first and or second end of the roller may comprise a journal connected to a drive unit adapted to impart a rotation motion to the roller around the rotation axis. The cylindrical roller may additionally comprise support and/or drive rollers. The roller itself may consist of steel, cast iron, copper, or any other material suitable for the intended use in the manufacturing of batteries. Moreover, the roller may comprise a layer structure, composed of layers with different materials suitable for ensuring structural integrity of the roller and/or counteracting deformation of the roller and/or providing an adequate surface hardness. As required in the manufacturing process of batteries, the roller may be heated or cooled. A cylindrical roller in the sense of invention may also be known to those pertaining to the field of the invention under the designation pressure roller, rolling cylinder, or calender.

Herein, the expression "apply roll pressure" refers to the act of exerting a force from the cylindrical roller onto a surface of the battery cell while the cylindrical roller is rotated in the direction of a feed direction of the battery cell of or counter to a feed direction of the battery cell. In particular, the term incorporates the exerting of straining and/or stretching and/or compression force onto the battery cell, wherein the aforementioned forces may be applied in succession or simultaneously in different positions on or under a surface of the battery cell. The force is preferably uniformly applied in a line-like or flat area in a position of a nip formed in between the cylindrical roller a counter roller or other transporting means adapted to transport the battery cell in a direction.

Moreover, "rolling over" in the sense of the invention is the rotational motion of the cylindrical roller around the rotation axis in which the roller is mounted while the battery cell is transported relative to the cylindrical roller. The indication of "under" does not imply a specific orientation with regard to the direction of gravity but also encompasses transportation to the left, right, and above the cylindrical roller. The rotational axis of the cylindrical roller itself may not be fixed but adjustable in its position relative to the feed direction and position of the battery cell.

Herein, the term protrusion indicates an exposed geometry on the lateral surface of the cylindrical roller. Specifically, the protrusion may exceed in radial direction other structures and surfaces on the lateral surface of the cylindrical roller at least directly adjacent to the protrusion. In particular, the protrusion can be shaped to come into contact with the battery cell as the cylindrical roller is rolled over the battery cell, while other structures on the lateral surface of the cylindrical roller remain clear of the surface of the battery cell. The protrusion can be part of the cylindrical roller, i.e. inseparable from the cylindrical roller, formed from the same material of the cylindrical roller, or mountable in or onto the cylindrical roller in a non-destructive fashion. Specifically, the protrusion can be adapted to be frequently and conveniently removed and/or exchanged from the cylindrical roller. The protrusion may be adapted to spread the force applied by the cylindrical roller over a line-like area oriented perpendicular to a feed direction of the battery cell when the protrusion comes into contact with the battery cell.

Herein, a lateral surface of the cylindrical roller indicates the outmost positioned surface of the cylindrical roller in a radial direction parallel to its rotation axis. The lateral surface may correspond to the geometric surface formed by the maximum extent in the radial direction of the cylindrical roller in any given angular direction as measured from the rotation axis.

Herein, a radial direction corresponds to the radial direction commonly associated with the cylindrical coordinate system, whereas the longitudinal axis of said coordinate system aligns with the rotation axis of the cylindrical roller.

An actuator in the sense of the invention is a device that converts an input signal or control signal into a required form of mechanical energy. Specifically, an actuator can be a device that produces force, torque, and/or displacement in a controlled way and in a controlled direction, when an electrical pneumatic or hydraulic input is supplied to it. An actuator converts such an input signal into the required form of mechanical energy. The actuator may comprise or be connected to a control device and a source of energy. The control signal may be relatively low energy compared to the produced force or torque and can be electric voltage or current, pneumatic, or hydraulic fluid pressure. The displacement achieved is commonly linear or rotational, for example, the displacement generated by a linear motor or rotary motor, respectively. An actuator in the sense of the invention may be an incremental-drive actuator or a continuous-drive actuator. Specifically, an actuator can be a stepper motor. Further examples of continuous-drive actuators are DC torque motors, induction motors, hydraulic and pneumatic motors, and piston-cylinder drives. The actuator can be configured to apply the controlled pressure directly or indirectly to the protrusion. For example, the actuator can comprise transmission, such as a leadscrew to generate a linear movement from the torque provided in a rotary motion can be adapted to function as a linear actuator and/or a lever element to enhance and/or redirect the controlled pressure. Moreover, the manufacturing system can comprise a plurality of actuators configured to apply a controlled pressure. The plurality of actuators may apply pressure in parallel or/and or in series to enhance the pressure locally or differentiate the applied pressure in different locations of the protrusion or the battery cell.

Herin, the term "controlled" generally refers to the regulation or maintenance of a pressure applied to or received by the protrusion, i.e. the controlled pressure indicates a pressure applied to or received by the protrusion and/or battery cell that is at least incrementally, or preferably continuously adjustable to a desired magnitude. The application of controlled pressure involves devices of the manufacturing system adapted for monitoring and adjusting pressure levels to meet designated standards and/or requirements. In particular, the controlled pressure is adjusted to ensure that sufficient force is applied to the battery cell to fuse the first and second separator film into a sealing line with sufficient sealing strength. Moreover, said designated standards and/or requirements may additionally comprise limiting the applied pressure to prevent damage to the battery cells. The desired magnitude of the controlled pressure may be a set value or time variant signal. In particular, the controlled pressure may be achieved in any technologically sensible form of automation or automatic control known to the experts pertaining to the field of invention.

In a further embodiment, the battery manufacturing system further comprises a pressure measurement device configured to measure a measured pressure applied to or received by the protrusion.

Thereby, the manufacturing system is provided the capability to directly obtain the measured pressure to ascertain whether the applied pressure satisfies designated standards and/or requirements for sealing the first and second separator fields into a sealing line and adjust the applied pressure accordingly.

Herein, the expression relates to a single unit or a plurality of units and/or devices, capable of sensing a mechanic, pneumatic, or hydraulic fluid pressure and transforming said sensed pressure into a quantitative signal. The quantitative signal may itself be the measured pressure or transformed into the measured pressure by the pressure measuring device or additional devices of the manufacturing system. Moreover, the pressure measurement device may be configured to transform and/or log the sensed pressure. The pressure measurement can comprise or consist of, a manometer, a pressure gauge, a transducer, and or a pressure sensor. Moreover, the sensor can be configured to measure the measured pressure as the protrusion comes into contact with the battery cell. The pressure measurement device can be configured to measure continuously or periodically. The pressure measurement device can comprise a plurality of sensors. The pressure measurement device can be configured to communicate wirelessly with the sensors, itself, and/or the control unit. Preferably, the pressure measurement device is an Internet of Things (loT) device.

Herein, the expression measured pressure corresponds to a signal measured by the pressure measurement device, which relates to the pressure applied or received by the protrusion in an absolute or relative relationship. Preferably, the measured pressure is the physical pressure of a gas or liquid or a mechanical component converted into an electrical signal that can be measured, monitored, and processed. The measured pressure can be provided as an analog output, for example as 4-20 mA or voltage signals, or a digital output, which can be further processed by systems or control devices.

In a further embodiment, the battery manufacturing system further comprises a control unit to control the controlled pressure applied to the protrusion by the actuator as a function of the measured pressure.

Accordingly, the manufacturing system can be capable of automatic control of the pressure applied to the protrusion and therefore to the battery cell, i.e. the pressure applied can be effectively controlled during the production of battery cells. Thus, a sealing strength is guaranteed without interruption of the production even when production conditions change.

Herein, the terms "control" and "control unit" are to be understood in accordance with the principles of automatic control in the technical field of automation and systems engineering. The control unit may be a singular device or comprise a plurality of devices. Generally, the control unit is configured to receive the measured pressure, and preferably, by means of a feedback mechanism, to control the applied pressure. Here control is the maintaining of a desired output level of the applied pressure by adjusting inputs or conditions of the actuator or actuators. The control unit may comprise a controller, for example, be programmable logic controller (PLC), a distributed control system DCS, or a microcontrollers. The controller can be configured to process signals from the pressure measurement device, apply control algorithms, and output commands to actuators. Moreover, the control device may comprise a human-machine interface (HMI) adapted to allow operators to interact with the control unit or the wider manufacturing system. The HMI may include displays, touchscreens, and/or control panels for monitoring and manual intervention. Furthermore, the control unit may comprise communication hardware adapted to facilitate data exchange between different parts of the control system or with the wider manufacturing systems, including wired networks, wireless transmitters, and communication protocols. The control unit can comprise a power supply unit adapted to provide the necessary power for all electronic components within the control system. Lastly, the control system may comprise one or a plurality of feedback devices. These consist of additional sensors or encoders adapted to provide real-time data to the controller to compare desired and actual performance.

Similarly, the expression "a function of the measured pressure" is to be interpreted in the context of automatic control and relates to set of mathematic rules and/or transformations for the measured pressure to a set of inputs or conditions of the actuator.

In a further embodiment of the invention, the battery manufacturing system comprises a plurality of protrusion rows that are equidistantly spaced in an angular direction on the lateral surface of the cylindrical roller. Preferably, the battery manufacturing system can comprise at least three protrusion rows.

The plurality of protrusion roll allows the generation of multiple sealing lines in a single revolution of the cylindrical roller. Simultaneously, while maintaining a high rate of production, a diameter of the cylindrical roller can be increased to achieve a favorable curvature of the lateral surface of the cylindrical roller for applying pressure to the battery cell. Consequently, the embodiment allows a higher production rate while maintaining a high sealing line quality.

Herein, the term protrusion rows corresponds to a single protrusion or a plurality or grouping of protrusions that essentially align in an angular direction on the lateral surface of the cylindrical roller. Specifically, the protrusion or a plurality or grouping of protrusion in the protrusion row forms an arrangement in a horizontal line on the lateral surface of the cylindrical roller. Each row of protrusions can be adapted to apply pressure sufficient to generate a sealing line in an individual battery cell.

Herein, an angular direction corresponds to the angular direction commonly associated with the cylindrical coordinate system, whereas the longitudinal axis of said coordinate system aligns with the rotation axis of the cylindrical roller. The angular direction indicates the position of the protrusion row in the circular path projected onto the lateral surface of the cylindrical roller.

In a further embodiment, the battery manufacturing system further comprises an idle roller arranged opposite to the cylindrical roller so as to support the battery cell against the cylindrical roller.

The idle roller can provide a supporting counterforce to the pressure applied by the protrusion. As the can counterforce can be pinpointedly applied in a nip formed between the cylindrical roller and the idle roller, mechanical stress to the battery cell is minimized. Consequently, failure of battery cell components during production is minimized and longevity is increased.

Herein, an idle roller in the sense of the invention is an essentially cylindrical or conical tool, which is adapted to applying pressure or force over a line-like surface and/or flat surface of the idle roller to a battery cell. An idle roller may at least consist of a roller supported by two bearings at each end over which the roller is rotatably mounted on a rotation axis. The first and or second end of the roller may comprise a journal connected to a drive unit adapted to impart a rotation motion to the idle roller around the rotation axis. The cylindrical roller may additionally comprise support and/or drive rollers. The roller itself may consist of steel, cast iron, copper, or any other material suitable for the intended use in the manufacturing of batteries. Moreover, the roller may comprise a layer structure, composed of layers with different materials suitable for ensuring structural integrity of the roller and/or counteracting deformation of the roller and/or providing an adequate surface hardness. As required in the manufacturing process of batteries, the roller may be heated or cooled. A lateral surface of the idle roller can be covered by a layer of elastic material, preferably silicone. A diameter of the idle roller can be larger than a diameter of the cylindrical roller to ensure that the pressure is applied in differing positions on the lateral surface of the idle roller in each revolution of the idle roller.

Herein, the expression "arranged opposite" in the context of the invention is to be interpreted as positioned with respect to the cylindrical roller to be able to encompass the battery cell at least in one position between the cylindrical roller and the idle roller. In particular, the idle roller is arranged opposite the cylindrical roller so that the rational axis of the idle roller and the rotational axis of the cylindrical roller are arranged parallel to each other. Preferably, the idle roller is arranged opposite the cylindrical roller to form a nip dimensioned to receive the battery cell in between the idle roller and the rotational axis of the cylindrical roller.

Herein, the expression "as to support the battery cell against the cylindrical roller" is to be generally interpreted as to be adapted to supply a force to the battery cell while a pressure is applied to the battery cell. Preferably, the force is suppliable in a radial direction counter to the direction of the pressure applied. Moreover, the force is preferably suppliable in a line-like area comparable in size and orientation to a sealing line.

According to another embodiment, the protrusion is movably mounted in a radial direction to the lateral surface of the cylindrical roller. The actuator can be configured to adjust a position of the protrusion in a radial direction relative to the lateral surface of the cylindrical roller.

Correspondingly, the protrusion can perform a displacement motion in a radial direction relative to the lateral surface, allowing the cylindrical roller to adjust the rolling pressure in a direct and precise way. Moreover, this allows the direct adjustment of a gap formed between the cylindrical roller and an idle roller or other supporting means. Consequently, sealing lines may be generated with higher precision and tighter geometrical limits.

Herein, the expression "movably mounted" refers to an attachment securement of the protrusion in such a way that it can move or be adjusted within certain limits with respect to the cylindrical roller and or later surface. In particular, the protrusion is not fixed in place and can change position or orientation but instead held so as to move freely and/or to be relocated as needed. Specifically, the movably mounted protrusion may be adapted for automated controlled movement in relation to the cylindrical roller and or later surface. A corresponding controlled movement in the sense of the invention is a linear sliding, a pivoting, or a rotation, or a combination of these. To this end, the cylindrical roller may comprise a mounting system encompassing bearings, hinges, brackets, rails, and the like that allow movement while maintaining stability and support of the protrusion.

In an embodiment of the battery manufacturing system, the protrusion is movably mounted within a channel in the lateral surface of the cylindrical roller.

The channel provides full mechanical support in lateral and angular directions to the protrusion mounted therein. Moreover, an effective guiding of the protrusion in the radial direction is achieved, preventing tilting or jamming of the protrusion while pressure is applied to or received by the protrusion. Consequently, the rolling pressure can be applied to the battery cell with higher precision and lower risk of mechanical failure.

Herein, a channel in the context of the invention is a geometrical topology in the lateral surface of the cylindrical roller that allows for the fitting and guiding of the movement of the protrusion. Particularly, the channel is preferably a long, narrow deepening within the lateral surface of the cylindrical roller. The channel may also be known by other designations as groove, indentation, or cutout. The channel may comprise straight channel walls, rounded channel walls, or v-shaped channel walls.

In an embodiment, the actuator is a piezoelectric actuator. Here, the piezoelectric actuator is to be understood in the conventional sense as a device that converts electrical energy into mechanical motion using the piezoelectric effect, i.e. utilizing the effect that occurs in piezoelectric materials that produce an electrical charge in response to applied mechanical stress and, conversely, undergo mechanical deformation when an electric field is applied.

The employment of a piezoelectric actuator in the context of the invention allows high accuracy and resolution in applying pressure with quick response and actuation times to the protrusion. Moreover, as only comparatively small displacement movements are required to adjust the applied pressure in normal production operation of the manufacturing systems, drawbacks of piezoelectric actuators in the form of a limited motion range are fully compensated. Consequently, a corresponding manufacturing system provides a quicker response and more precise response in applying the rolling pressure.

Alternatively or additionally, the actuators can be a hydraulic actuator, preferably a plunger cylinder or a double-acting cylinder. Moreover, the actuator can be an electromechanical actuator, preferably an electric linear actuator or an electric rotary actuator with a lead screw drive or a worm gear drive. Additionally, the actuator can be a pneumatic linear actuator. Moreover, the actuator can be configured to adjust the position of the protrusion once every revolution of the cylindrical roller and/or continuously. Moreover, the actuator can be configured to adjust the position of the protrusion while the protrusion is engaging the battery cell. The protrusion can be movably mounted within a channel on the lateral surface of the cylindrical roller. The actuator can be situated in a radial direction in between the cylindrical roller and the protrusion. Preferably, the actuator can be situated at the bottom surface of the channel.

According to an embodiment of the manufacturing system, the protrusion is secured within the channel by a first and a second locking member. The position of the protrusion in a radial direction relative to the lateral surface of the cylindrical roller can be adjustable by a relative movement of the first locking member with respect to the second locking member. Moreover, the first and second locking members can each comprise a holding side, which is sloped towards the radial direction and adapted to engage the protrusion.

In this fashion, the manufacturing system is provided with a securing means for the protrusion, which allows for quick and convenient replacement of the protrusion while doubling as a transmission element for imparting a controlled radial movement to the protrusion. Consequently, the manufacturing system is significantly easier to maintain.

Herein, the "expression secured within the channel" is to be understood generally as to be provided with the means to limit the total extent of movability of the protrusion within the channel. Particularly, the term is to be understood as to allow a movement of the protrusion within a minimum and maximum radial position with respect to the lateral surface. Preferably, the expression includes a complete restriction of a movement of the protrusion in a lateral and angular direction.

Herein, the first and second locking members correspond to components adapted to secure the protrusion within the channel by form fit and/or friction fit. In particular, the terms a first and second locking member comprise an outer geometry complementary to both the protrusion and the channel as to facilitate a form fit or friction fit, once the protrusion reaches a minimum or maximum radial position with respect to the lateral surface within the channel. Preferably, the first and second locking members are symmetrical to each other and situated in an angular direction next to the protrusion to encompass it.

In a further embodiment of the manufacturing system, the protrusion is mounted within the channel to atmospherically seal the channel. The actuator can be configured to adjust the gas pressure within the channel.

As such, the rolling pressure can be applied in a beneficial pressure profile with the channel and the protrusion acting in conjunction similar to a pneumatic element which increases the pressure applied highly progressively as the protrusion is displaced within the channel. The pressure profile can be effectively adjusted by controlling an average pressure within the channel. Moreover, the requirement for the maximum output of the actuator to adjust the gas pressure is comparatively low, allowing for the employment of cheap and energy-saving components. Consequently, the cost of the manufacturing system and cost of operation is decreased.

Herein, the expression "to atmospherically seal" indicates a mode of mounting the protrusion within the channel as to disrupt a fluidical exchange between the inside of the channel and the environment of the manufacturing system. In particular, the channel and protrusion in conjunction, potentially with additional components of the cylindrical roller, form a seal or barrier that prevents the ingress or egress of air and other fluids between the inside of the channel and the environment outside the channel. Preferably, to this end, the channel and/or protrusion and/or first or second locking members accommodate seals, O-rings, or gaskets, adapted (e.g., dimensioned and shaped such as) to retain fluids and prevent leakage.

Herein, adjusting the gas pressure within the channel refers to the ability to increase the gas pressure formed within the closed confinement between the protrusion and channel walls. In particular, the gas pressure may be adjusted by the actuator directly by providing a mass flow of gas or other fluid into the closed confinement between the protrusion and channel walls or indirectly, by reducing the volume of the closed confinement. The actuator is fluidically connected to the channel via a valve. The actuator can be fluidically connected to each channel of a plurality of protrusion rows.

In an embodiment, the pressure measurement device comprises a pneumatic pressure sensor configured to measure a gas pressure within the channel.

Accordingly, the applied pressure and the measured pressure are directly applied to and measured in, respectively the closed confinement formed by the protrusion and channel walls. Thus, a cost-effective feedback loop to control the controlled pressure can be established with a minimum of complex or moving components. Thus, limiting both the cost of the manufacturing system itself as well as the cost of operation.

Herein, a pneumatic pressure sensor in the context of the invention is a device used to measure the pressure of gases or air in pneumatic systems. These sensors can detect and convert the pressure of a fluid (usually air, but not limited to air) into an electrical signal, which can be analyzed, displayed, and/or utilized in the control unit. The pneumatic pressure sensor may be an absolute pressure sensor adapted to measure pressure relative to a perfect vacuum, which is especially suitable for acquiring precise pressure measurements. Alternatively or additionally, the pneumatic pressure may be a gauge pressure sensor adapted to measure a pressure relative to atmospheric pressure in an environment of the manufacturing system. Alternatively or additionally, the pneumatic pressure may be a differential pressure sensor adapted to measure the difference in pressure between two points, for example, the closed confinement enclosed the gas pressure formed within the closed confinement between and a second atmospherically sealed volume within the cylindrical roller.

In an embodiment, the pressure measurement device can comprise a sensor, preferably a piezoelectric or piezoresistive sensor configured to measure the measured pressure applied to or received by the protrusion in a radial direction. The sensor can be situated in between the cylindrical roller and the protrusion.

Hence, the embodiment allows a more direct measurement of the direction and magnitude of the measured pressure, thereby increasing the accuracy of the quality of a control response of the actuator. Consequently, the sealing strength of the sealing line can be more accurately adjusted.

Herein, a sensor within the meaning of the invention is a device or plurality of devices that detects and measures physical properties, environmental conditions, or changes in the protrusion's state. In particular, a sensor in the context of the invention detects a mechanical force directly or indirectly transmitted from the protrusion to the sensor. The sensor converts these measurements into signals that can be communicated and/or interpreted, for monitoring, control, and/or automation purposes. Preferably, the sensor can be a capacitive pressure sensor or an electromagnetic pressure sensor. Alternatively, the sensor can be situated in a radial position on the outmost edge of the protrusion and adapted to directly measure the pressure between the protrusion and the separator film.

Herein, the expression "situated in between the cylindrical roller and the protrusion" indicates the geometric arrangement of the sensor in radial direction as in series with the cylindrical roller and the protrusion, wherein the sensor either directly or indirectly adjoins in radial direction the cylindrical roller on a first side and either directly or indirectly adjoins the protrusion on a second side. Additionally, in the radial direction below or above the sensor, support components, such as guiding elements, support plates, bearing elements, and/or lever elements adapted to transmit a force or displacement movement between the sensor and the protrusion may be situated in between the cylindrical roller and the protrusion, respectively.

Moreover, the sensor can be a capacitive pressure sensor or an electromagnetic pressure sensor. Alternatively, the sensor can be situated in a radial position on the outmost edge of the protrusion and adapted to directly measure a pressure between the protrusion and the separator film.

Furthermore, the pressure measurement device can comprise a load cell, wherein the cylindrical roller or the idle roller is rotatably mounted on the load cell and the load cell is configured to measure a pressure applied or received by the cylindrical roller or an idle roller, respectively, while rolling over the battery cell. Herein, a load cell is a type of sensor employed to measure force, weight, or load exacted onto it by a machine component mounted to it and/or supported by it. In particular, the load cell is configured to receive and support bearings of the cylindrical roller or idle roller and measure bearing forces exacted to the load cell. Here, the load converts the bearing forces into an electrical signal that can be measured, quantified, communicated, and/or analyzed. Load cells in the sense of the invention can operate based on the principle of strain measurement. Specifically, when a load is applied to the bearings while a rolling pressure is applied to a battery cell, the load cell or components of the load cell deform slightly, and this deformation changes the resistance in the strain gauges embedded within the load cell. A bearing or a bearing housing of the cylindrical roll or the idle roller can be directly or indirectly mounted to the load cell. A first and a second longitudinal end of the cylindrical roller and/or the idle roller can be rotatably mounted on a load cell. Herein, A first and a second longitudinal end of the cylindrical roller and/or the idle roller correspond to the longitudinal direction outmost positioned surfaces of the cylindrical roller or idle roller, respectively. Here, the longitudinal direction is to be understood as the lateral direction commonly associated with the cylindrical coordinate system, whereas the longitudinal direction essentially aligns with the rotation axis of the cylindrical roller. The pressure measurement device can be configured to subtract bearing forces stemming from the weight and rotation of the cylindrical roller or idle roller from the pressure signal received from the load cells to generate the measured pressure. Furthermore, the pressure measurement device can comprise a first and a second sensor configured to measure a first and a second measured pressure applied to or received by the same protrusion. The first and second sensors can be situated at each lateral end of the cylindrical roller. The control unit can be configured to control the controlled pressure applied to the protrusion as a function of the mean and/or minimum and/or maximum of at least a first and a second measured pressure.

In an embodiment, the battery manufacturing system further comprises a plurality of protrusions protruding from a lateral surface of the cylindrical roller in a radial direction of the cylindrical roller. The protrusions can align in a longitudinal direction of the cylindrical roller and the pressure measurement device can be configured to measure a measured pressure applied to or received by each protrusion of the plurality of protrusions.

As the measured pressure can be obtained in multiple locations on the lateral surface of the cylindrical roller, the embodiment allows for a spatial distinction of the applied pressure to the battery cell. Hence, not only a mean applied pressure can be controlled for, but instead a spatially resolved pressure can be measured and accounted for. As such, for example, sufficient sealing strength can be ensured along the entire length of the sealing line. Consequently, the embodiment allows for the generation of more homogeneous sealing lines.

Herein, a plurality of protrusions indicates a multitude of protrusions located in different positions on the lateral surface of the cylindrical roller, wherein each protrusion of the plurality of protrusions or multiple protrusions of the plurality of protrusions in conjunction are configured to form a sealing line in a battery cell when a roll pressure is applied onto a battery cell. The protrusions can be located in a different longitudinal and/or angular position on the lateral surface of the cylindrical roller. Preferably, the protrusions of the multitude of protrusions are each movably mounted to the lateral surface, to at least allow a relative movement in a radial direction relative to the other protrusions in the plurality of protrusions.

Herein, the expression to "be configured to measure a measured pressure applied to or received by each protrusion of the plurality of protrusions" is to be interpreted as possessing the capability to obtain directly or indirectly a measured pressure applied to or received by individual protrusions, preferably applied to or received by each individual protrusion on the lateral surface. In particular, each individual protrusion of the plurality of protrusions can be assigned a designated sensor of the pressure measurement device adapted to obtain a measured pressure of the individual protrusion.

Here, the longitudinal direction is to be understood as the longitudinal direction commonly associated with the cylindrical coordinate system, whereas the longitudinal direction essentially aligns with the rotation axis of the cylindrical roller. Alternatively, the protrusions can be staggered in the longitudinal direction of the cylindrical roller, allowing the manufacturing of two battery cells in parallel in a longitudinal direction, but applying the pressure in succession to the individual battery cells.

In a further embodiment of the manufacturing system, the control unit is configured to independently control the controlled pressure applied to each protrusion of the plurality of protrusions as a function of the measured pressure applied to or received by the protrusion of the plurality of protrusions. Specifically, the control unit can be configured to control the position of each protrusion of the plurality of protrusions in a radial direction relative to the lateral surface of the cylindrical roller.

Compared to the previously described embodiment, not only can a spatial difference in applied pressure be accounted for but additionally, a direction and/or magnitude of the rolling pressure can be applied differently on different locations on the lateral surface. Thereby, the homogeneity of the sealing lines can be further improved.

In an embodiment, the protrusion can be a tip. The geometry of the tip assures a precise application of pressure into the first and second separator film, while simultaneously providing sufficient space while rolling over the battery to avoid coming into contact with the first and second electrode material. Thus, adequate sealing strength is achieved while the risk of damage to the battery cell is reduced. Consequently, the embodiment allows for the manufacturing of battery cells with a significantly reduced rate of defects.

Herein, the term tip refers to the geometric shape of the protrusion, whereas the tip comprises an essentially triangular cross-section in the longitudinal direction. In particular, the tip comprises a first support side configured to engage with a surface of the cylindrical roller or the lateral surface of the cylindrical roller and, adjacent in angular direction, two sloped mounting surfaces that converge into a contact peak. Preferably, the tip is symmetrical with respect to its center axis in radial direction. Preferably, the tip can be a steel tip, an aluminum tip, a copper tip, or any other material or corresponding alloy suitable for applying and sustaining the applied pressure. Surface properties of the contact, such as surface roughness and surface curvature may be adapted to generate friction heat between the contact peek and the battery cell while preventing an entry and/or destruction of the first and second separator films.

In another aspect, the invention relates to a battery manufacturing method. The method comprises the following steps:
- applying a roll pressure onto a battery cell using a cylindrical roller rolling over the battery cell;
- by rolling of the cylindrical roller over the battery cell, applying a controlled pressure onto the battery cell through a protrusion protruding from a lateral surface of the cylindrical roller in a radial direction of the cylindrical roller; and
- controlling a controlled pressure applied to the protrusion in the radial direction.

Thereby, battery cells with a high-quality sealing line can be cost efficiently manufactured.

The battery manufacturing method may further comprise the measuring measured pressure applied to or received by the protrusion.

Moreover, the method can comprise the step of feeding the measured pressure into a control loop, preferably a closed control loop; generating a control signal by comparison of the measured pressure to a reference pressure to be applied and/or received by the protrusion and subsequent error-minimization to receive a control signal; and controlling a pressure applied to the protrusion based on the control signal. Herein, the term control loop is to be interpreted as the commonly understood concept in control engineering and systems theory. Correspondingly, a control loop in the context of the invention involves the use of feedback to maintain a desired output or performance level in a system, here the controlled pressure applied to the battery cell. At least, the control loop performs the comparison of a desired setpoint of the pressure applied or received by the protrusion to or reference value of the applied or received pressure, and a performing adjustment of the controlled pressure based on the difference between the two.

The adjusting can be performed under load and/or in real-time. Alternatively, the adjusting can be performed while the roll pressure is not applied.

The battery manufacturing method can further comprise the controlling of the measured pressure, wherein the measured pressure is compared to a threshold pressure, and flagging the battery cell to be discarded if the measured pressure stays below the threshold pressure. The controlling of the measured pressure may comprise the recognizing of an abnormal pressure, which is the result of the protrusion striking the first and/or second electrode material and is indicative of a faulty battery cell or a feed speed of the battery cell and a rotational speed of the cylindrical roller being out of sync. Upon recognizing an abnormal pressure, the system for manufacturing can be halted, and/or the battery cell can be flagged as faulty.

The reference pressure can be a scalar value or a time-resolved signal. Alternatively, the reference pressure can be a tuple of values, preferably a lower pressure threshold value, an ideal pressure value, and/or an upper pressure threshold value.

The generating can be performed by a controller, preferably by a PID Controller.

In a last aspect, the invention relates to a battery cell and/or a battery and/or battery product manufactured by the above method.

The effects of the present disclosure are not limited to the effects mentioned above and additional other effects not described above will be clearly understood from the detailed description and the accompanying drawings by those skilled in the art.

### BRIEF DESCRIPTION OF THE DRAWINGS

Thereby,
- Fig. 1A. and Fig. 1B:: show an isometric view and a detail view, respectively, of a system for manufacturing battery cells known from the State-of-the-Art;
- Fig 2:: a schematic depiction of an embodiment of a system for manufacturing battery cells according to the invention;
- Fig. 3A and Fig. 3B:: a schematic depiction a detail view, respectively, of a second embodiment of a system for manufacturing battery cells according to the invention; and
- Fig. 4:: a schematic depiction of a third embodiment of a system for manufacturing battery cells according to the invention;

In the following, detailed examples are described in connection with the drawings. It is noted that the features that have been described above will not be repeated for the sake of conciseness. It is understood that any, some or all of the corresponding features described above may be implemented to the corresponding components unless indicated otherwise or technically inappropriate. Like components and features are labelled with same or related reference signs in the drawings and in the following description.

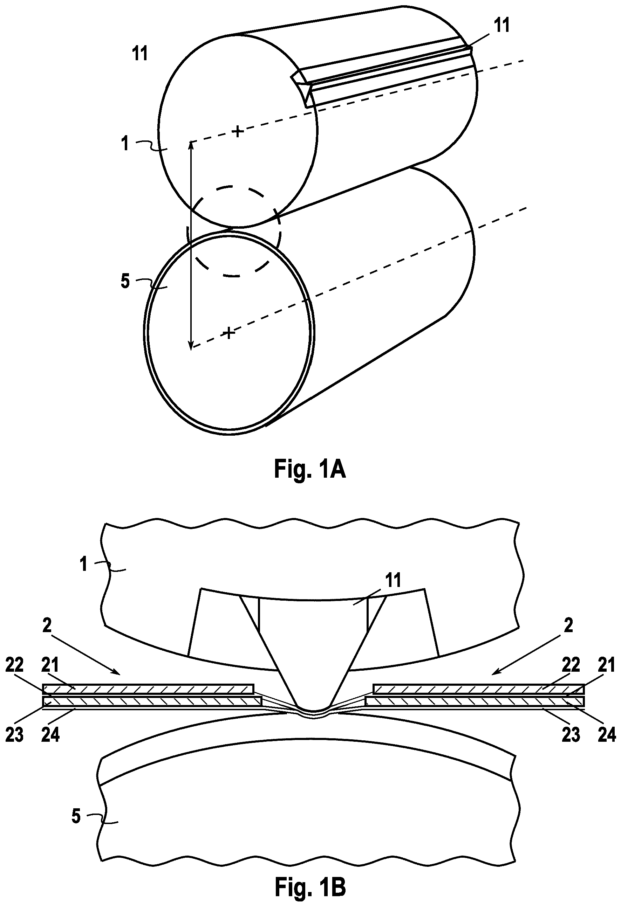

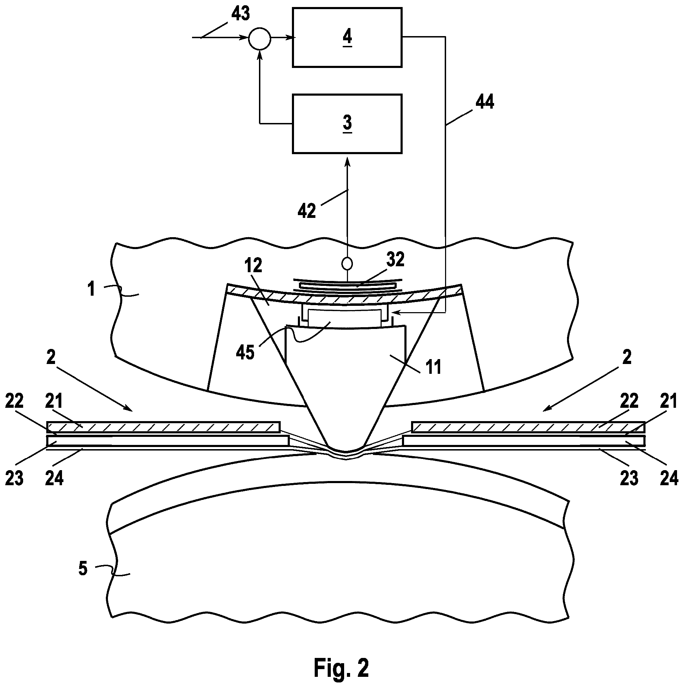

Figure 1A shows an isometric view and a detail view, respectively, of a system for manufacturing battery cells known from the State-of-the-Art. The system comprises a cylindrical roller 1 configured to apply a roll pressure onto battery cell 2 (omitted for clarity) while rolling over battery cell 2. A protrusion 11 protruding from a lateral surface of the cylindrical roller 1 in a radial direction of the cylindrical roller 1 is adapted to periodically apply a pressure on the first and second separator film 22, 24 thereby, fusing the first and second separator 22, 24 into sealing lines. The battery manufacturing system further comprises an idle roller 5 arranged opposite to the cylindrical roller 1 so as to support the battery cell 2 against the cylindrical roller 1. The battery cell 2 is guided through a roll gap formed in between idle roller 5. During the manufacturing, the position of the cylindrical roller 1 relative to the idle roller 5, indicated by the vertical double arrow, is fixed. The implications of the fixed relative position are illustrated by the detail view corresponding to the encircled region shown in Figure 2. At the depicted moment, protrusion 11 applies a pressure to the battery cell 2. The battery cell comprises a layer structure with a first electrode material 21 and second electrode 23 material intermittently dispersed onto a first 21 and a second separator film 23, respectively. This layer structure is guided in a feed direction into a roll gap formed between the cylindrical 1 roller and the idle roller 5. The rotation speed of cylindrical roller 1 and the feed speed of battery cell 2 are synchronized to allow the protrusion 2 to engage the battery cell 2 in positions where a gap in the first and second electrode material 22, 24 exists. The cylindrical roller is configured to apply a roll pressure onto a battery cell while rolling over the battery cell. The pressure and resultant friction heat causes the first and second separators 21, 23 to be fused into a sealing line across the entire lateral width under the roll gap. As the applied pressure depends on the width of the roll gap and consequently on the relative position of the cylindrical roller 1 to the idle roller 5, said relative position must be determined manually by trial and error before each start of a new production series. Yet, changes in the quality and thickness of the individual layers of battery cell 2, boundary conditions, and wear and tear in the components of the manufacturing system cause the applied pressure to fluctuate or change with time. Hence, the sealing strength of the sealing lines may vary and exceed or subceed critical values. Excess pressure might cause the separator films to separate completely and halt the manufacturing process. Succeeding critical values may impact subsequent processing stages, where the first and second separators 21, 23 may part, leading to spillage of electrolyte or short-circuiting with adjacent battery 2 cells in a battery-cell stack.

This problem is solved by the embodiment shown in Fig. 2. Besides the components already present in the previous embodiment, the depicted battery manufacturing system further comprises an electromechanical linear actuator 45 configured to apply a controlled pressure to protrusion 11 in the radial direction. The protrusion 11 is movably mounted within a channel 12 in the lateral surface of the cylindrical roller 1. Moreover, the actuator 45 is configured to adjust a position of the protrusion 11 within the channel in a radial direction relative to the lateral surface of the cylindrical roller 1. To this end, the actuator 45 is situated in a radial direction in between the cylindrical roller 1 and the protrusion 11. The battery manufacturing further comprises a pressure measurement device 3 configured to measure a measured pressure applied to or received by the protrusion 11. The pressure measurement device 3 comprises a piezoelectric sensor 31 configured to measure the measured pressure applied to or received by the protrusion 1) in a radial direction. The piezoelectric sensor 31 is situated in between the cylindrical roller 1 and the actuator 45. As the cylindrical roller is rotated over the battery cell 2, the protrusion 11 periodically engages the first and second separator films 21, 22 applying pressure and sealing said separator films 21, 22 into a sealing line. The resultant pressure is transferred through the protrusion 11, the linear actuator 45, and finally, is picked up by the piezoelectric sensor 32. The pressure signal is communicated as a measured pressure 42 and fed into a control loop 41 schematically drawn in the top corner of Figure 2. The measured pressure 42 can be an average of the first and second measured pressure 42, a minimum of the measured pressure 42, or a maximum of the first and second measured pressure 42. The measured pressure 42 is then compared to a reference pressure 43 corresponding to a nominal pressure necessary to achieve sufficient sealing strength. The resulting error between the nominal pressure and the measured pressure is communicated to a control unit 4, which is adapted to generate a control signal 44 and send the control signal 44 to the linear actuators 45 adapted to adjust a position of the protrusion 11 relative to the cylindrical roller 1 as indicated by the vertical double arrow.

In this fashion, the applied pressure is measured, monitored, and controlled continuously, assuring that each sealing line possesses sufficient sealing strength. Moreover, if a nominal pressure for achieving sufficient sealing is known, initial positioning experiments at the start of a new production series are circumvented.

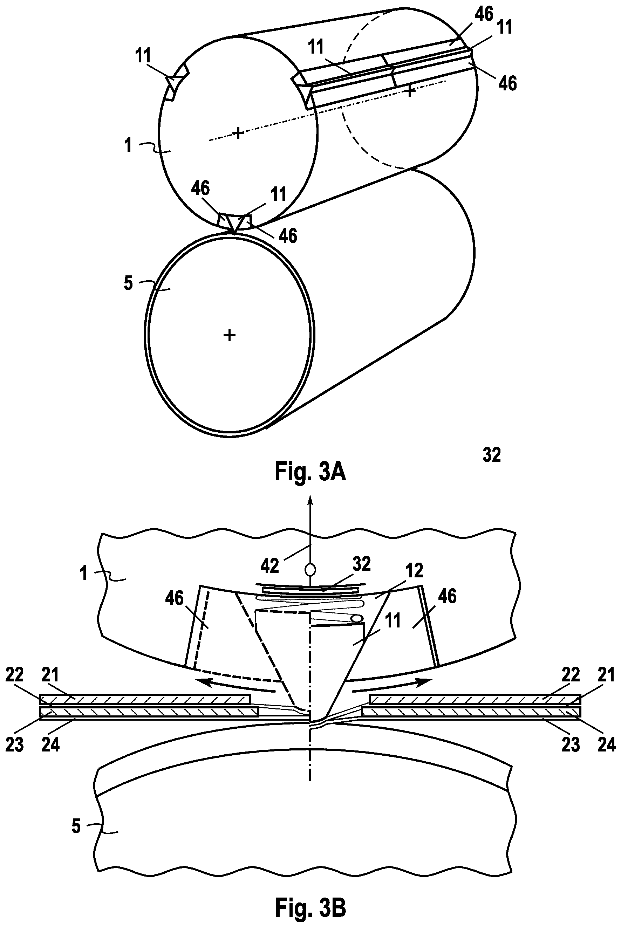

A second inventive embodiment is shown in Figures 3A and 3B. As can be seen in Figure 3A the cylindrical roller 1 comprises three protrusion rows, which are equidistantly spaced in angular direction in intervals of 120° on the lateral surface of the cylindrical roller 1. This allows the sealing of three sealing lines in one revolution of the cylindrical roller 1, thereby allowing the sealing of three sealing lines in one revolution of the cylindrical roller 1. Each row comprises two protrusions 11 protruding from a lateral surface of the cylindrical roller. The protrusions 11 align in a longitudinal direction of the cylindrical roller 1. The pressure measurement device 3 is configured to measure a measured pressure 42 applied to or received by each protrusion of the plurality of protrusions 11. As shown in detail in Figure 3B, the measured pressure 42 of each protrusion 11 is measured by a sensor 32 situated in the radial direction in between each protrusion 11 and the cylindrical roller 1. Trice every revolution of cylindrical roller 1, two piezoelectric sensors 32 situated in the same row measure a first and a second measured pressure 42 applied and/or received by the respective protrusion 11. The control unit 4 is configured to independently control the controlled pressure applied to each protrusion of the plurality of protrusions 11 as a function of the measured pressure applied to or received by the protrusion of the plurality of protrusions 11.

Similar to the previously shown embodiment, the two protrusions 11 are movably mounted within a channel 12, respectively. Each protrusion 11 is secured within channel 12 by a first and second locking member 46. The position of the protrusion 11 in radial direction relative to the lateral surface of the cylindrical roller is adjustable by a relative movement of the first locking member 46 with respect to the second locking member 46. For this purpose, the first and second locking members 46 each comprise a holding side, which is sloped towards the radial direction and adapted to engage the protrusion 11. A corresponding adjustment of the position of the protrusion 11 is illustrated in exaggerated proportions by the two different configurations of the manufacturing system depicted to the left and the right side of the dashed-dotted line in the center of the protrusion 11. First, as shown in the dashed lines on the left, due to a change in separator 22, 24, film thickness or wear and tear in the protrusion 11 or idle roller 5, a rolling gap between the cylindrical roller 1 and guiding roller 5 is too wide to apply sufficient pressure to the protrusion 11 and onto the sealing line to achieve necessary sealing strength. The lack of pressure is detected by the pressure measurement device 3, causing the control unit 4 to adjust the position of the protrusion 11. An actuator (not shown) is utilized to move the first locking member 46 apart from the second locking member 46 as indicated by the two arrows left and right of the dash-dotted line. The protrusion 11 is held in contact with the locking members 46 by a spring element and slides down the sloped holding sides and away from the cylindrical roller in a radial direction, thus decreasing the rolling gap and increasing the controlled pressure applied by the protrusion 11. The manufacturing system is adapted to adjust the relative position of each pair of first and second locking members 42, thereby allowing for separate control of the pressure in each row and the first and second lateral half of the cylindrical roller 1.

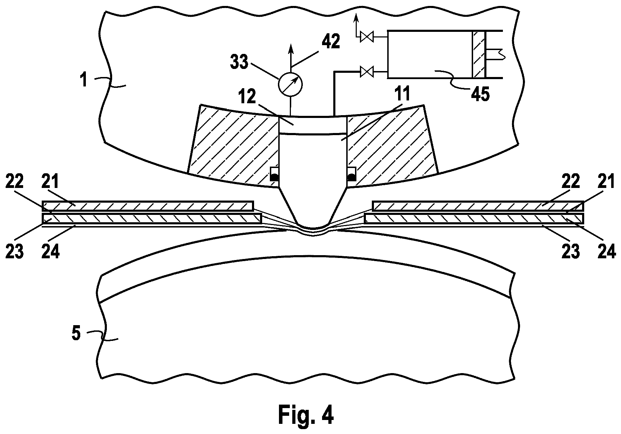

A third inventive embodiment is depicted in Figure 4. Here, three protrusions 11 are each movably mounted within a channel 12 on the lateral surface of the cylindrical roller 1 as to seal said channel 12 against the environment of the manufacturing system. The pressure measurement device 3 comprises a pneumatic pressure sensor 32 configured to measure a gas pressure within channel 12 while rolling over the battery cell 2. The pressure applied to or received by the protrusion 11 displaces the protrusion 11, which in turn compresses the gas sealed within the chamber. The consequent change in gas pressure is measured by the pneumatic pressure sensor 33. The channel and protrusion 11 in conjunction act as a pneumatic spring favorably changing the pressure application profile.

If the measured pressure 42 indicates that the applied pressure by the protrusion is insufficient to ensure the sealing strength of the sealing line, the control unit 4 is further configured to open and close a control valve, which fluidically connects the channel 12 to a pressure reservoir of the cylindrical roller 1 to allow gas to be exchanged between the channel and the pressure reservoir. Atmospheric pressure within the pressure reservoir and, while the control valve is opened, the atmospheric pressure in channel 12 is adjustable via an actuator 45, which is adapted to compress gas within the pressure reservoir with a piston. As the other channels 12 of the cylindrical roller 1 are also fluidically connected to the same pressure reservoir, adjusting the pressure applied by each protrusion 11 can be achieved individually with only a single actuator 45.

### Reference numerals

- 1: Cylindrical roller
- 2: Battery cell
- 3: Pressure measurement device
- 4: Control unit
- 5: Idle roller
- 11: Protrusion
- 12: Channel
- 21: First electrode material
- 22: First separator
- 23: Second electrode material
- 24: Second separator
- 31: Sensor
- 32: Pneumatic pressure sensor
- 41: Control loop
- 42: Measured pressure
- 43: Reference pressure
- 44: Control signal
- 45: Actuator
- 46: Locking member

## Claims

1. A battery manufacturing system comprising
a cylindrical roller (1) configured to apply roll pressure onto a battery cell (2) while rolling over the battery cell (2); and
a protrusion protruding (11) from a lateral surface of the cylindrical roller in a radial direction of the cylindrical roller (1);
**characterized in that**
the manufacturing system further comprises
an actuator (45) configured to apply a controlled pressure to the protrusion (11) in the radial direction.

2. The battery manufacturing system of claim 1, further comprising
a pressure measurement device (3) configured to measure a measured pressure applied to or received by the protrusion (11).

3. The battery manufacturing system of claim 2, further comprising
a control unit (4) to control the controlled pressure applied to the protrusion (11) by the actuator (45) as a function of the measured pressure.

4. The battery manufacturing system of any of the preceding claims, further comprising
an idle roller (5) arranged opposite to the cylindrical roller so as to support the battery cell against the cylindrical roller (5).

5. The battery manufacturing system of any of the preceding claims, wherein the protrusion (11) is movably mounted in a radial direction to the lateral surface of the cylindrical roller (2), and wherein the actuator (45) is configured to adjust a position of the protrusion (11) in the radial direction relative to the lateral surface of the cylindrical roller (1).

6. The battery manufacturing system of claim 5, wherein the protrusion (11) is movably mounted within a channel (12) in the lateral surface of the cylindrical roller (1).

7. The battery manufacturing system of claims 6, wherein the actuator (45) is a piezoelectric actuator or a hydraulic actuator or electromechanical actuator, and wherein the actuator (45) is preferably situated in a radial direction in between the cylindrical roller (1) and the protrusion (11).

8. The battery manufacturing system of claims 6 or 7, wherein the protrusion (11) is secured within the channel (12) by a first and second locking member (46), and wherein the position of the protrusion (11) in a radial direction relative to the lateral surface of the cylindrical roller is adjustable by a relative movement of the first locking member (46) with respect to the second locking member (46).

9. The battery manufacturing system of any claim 6, wherein the protrusion (11) is mounted within the channel (12) as to atmospherically seal the channel (12), and wherein the actuator (45) is configured to adjust the gas pressure within the channel (12).

10. The battery manufacturing system of any claim 9, wherein the pressure measurement device (3) comprises a pneumatic pressure sensor (32) configured to measure a gas pressure within the channel (12).

11. The battery manufacturing system of any claims 2 to 10, wherein the pressure measurement device (3) comprises a sensor, preferably a piezo sensor (31) configured to measure the measured pressure applied to or received by the protrusion (11) in a radial direction, and wherein the sensor (31) is situated in between the cylindrical roller (1) and the protrusion (11).

12. The battery manufacturing system of any of the claims 2 to 11, wherein the battery manufacturing system further comprises a plurality of protrusions (11) protruding from a lateral surface of the cylindrical roller in a radial direction of the cylindrical roller (1), wherein the protrusions (11) align in a longitudinal direction of the cylindrical roller (1) and wherein the pressure measurement device (3) is configured to measure a measured pressure (42) applied to or received by each protrusion of the plurality of protrusions (11).

13. The battery manufacturing system of any claims 12, wherein the control unit (4) is configured to independently control the controlled pressure applied to each protrusion of the plurality of protrusions (11) as a function of the measured pressure applied to or received by protrusion of the plurality of protrusions (11).

14. The battery manufacturing system of any of the preceding claims, wherein the protrusion (11) is a tip, preferably a steel tip.

15. A battery manufacturing method comprising
applying a roll pressure onto a battery cell using a cylindrical roller rolling (11) over the battery cell;
by rolling of the cylindrical roller (11) over the battery cell, applying a controlled pressure onto the battery cell (2) through a protrusion (11) protruding from a lateral surface of the cylindrical roller (1) in a radial direction of the cylindrical roller (1); and
controlling a controlled pressure applied to the protrusion (11) in the radial direction.
